# EUROPÄISCHE PATENTSCHRIFT

(11) **EP 1 899 616 B1**
(45) Veröffentlichungstag und Bekanntmachung des Hinweises auf die Patenterteilung: **16.12.2009**
(21) Anmeldenummer: 06743183.3
(22) Anmeldetag: 22.06.2006
(51) Int. Cl.: F16C 23/04, F16C 33/74

(54) **GELENKLAGER**
JOINT BEARING
PALIER ANTAGONISTE

(30) Priorität: 28.06.2005 DE 102005029979
(43) Veröffentlichungstag der Anmeldung: 19.03.2008
(73) Patentinhaber: Schaeffler KG, 91074 Herzogenaurach (DE)
(72) Erfinder: PESCHKE, Harald, 90587 Veitsbronn (DE); WILHELM, Olaf, 33790 Halle (DE); FICKERT, Thomas, 91555 Feuchtwangen (DE)
(86) Internationale Anmeldenummer: PCT/EP2006/005999
(87) Internationale Veröffentlichungsnummer: WO 2007/000275

(56) Entgegenhaltungen:
- DE-A1- 2 408 740
- DE-U1- 29 900 907

## Beschreibung

### Anwendungsgebiet der Erfindung

Die Erfindung betrifft ein Gelenklager, bestehend aus einem Innenring mit einer sphärisch gekrümmten Außenfläche und einem diesen aufnehmenden Außenring mit einer sphärisch gekrümmten Innenfläche, wobei in einer im Außenring umlaufenden Nut eine Dichtung angeordnet ist, die einen ringförmigen Träger mit einem im Wesentlichen winkelförmigen Querschnitt und einen mit dem Träger verbundenen Dichtungskörper aufweist, der an der sphärisch gekrümmten Außenfläche des Innenringes schleifend anliegt.

### Hintergrund der Erfindung

Ein derartiges Gelenklager mit zugehöriger Dichtungseinheit ist aus der DE 299 00 907 U1 vorbekannt. Wie die Figuren 1, 2 und 3 sowie die zugehörige Beschreibung erkennen lassen, ist in einer Nut im Außenring eines Gelenklagers eine Dichtungseinheit angeordnet, die schleifend an der sphärisch gekrümmten Außenfläche des Innenrings anliegt. Diese besteht aus einem winkelförmigen Träger, der mit dem elastischen Dichtungskörper verbunden ist, der wiederum schleifend an der Außenfläche des Innenringes anliegt. Der Dichtungskörper ist am äußeren Ende mit einem Vorsprung von der umlaufenden Nut im Außenring aufgenommen und weist eine in Richtung Innenring zeigen die einzige Dichtlippe auf, die mit zwei schleifenden Dichtkanten am Innenring anliegt. Die dritte schleifende Dichtkante ist unmittelbar am Dichtungskörper angebunden und daher relativ starr. Alle drei hintereinander angeordnete Dichtkanten liegen gleichzeitig an der sphärisch gekrümmten Außenfläche des Innenringes an, wobei die Vorspannung in etwa die gleiche ist. Diese Dichtkanten werden daher gleichmäßig verschlissen, was aus dichtungstechnischer Sicht nicht von Vorteil ist.

### Zusammenfassung der Erfindung

Der Erfindung liegt daher die Aufgabe zugrunde, eine Dichtungseinheit für ein Gelenklager bereitzustellen, die zuverlässig abdichtet und die vom Verschleiß unabhängig ist.

Erfindungsgemäß wird diese Aufgabe nach dem kennzeichnenden Teil von Anspruch 1 in Verbindung mit dessen Oberbegriff dadurch gelöst, dass der Dichtungskörper in Richtung des Innenringes zwei voneinander beabstandete, einander entgegengerichtete elastische Dichtlippen aufweist, wobei gegenüber einer, zu einer Lagerachse senkrecht verlaufenden Ebene, die erste Dichtlippe nach außen und die zweite Dichtlippe nach innen ausgerichtet ist und beide Dichtlippen wenigstens eine schleifende Dichtkante aufweisen, wobei sich an die erste schleifende Dichtkante nach innen beabstandet eine zweite Dichtkante anschließt, die im eingebauten Zustand bei noch nicht eingetretenem Verschleiß von der sphärisch gekrümmten Außenfläche des Innenringes durch einen Spalt beabstandet angeordnet ist.

Die beiden voneinander unabhängigen Dichtlippen sorgen durch ihre elastische Anbindung am Dichtungskörper für einen relativ geringen Verschleiß, wobei über einen langen Zeitraum in dichtungstechnischer Sicht eine hoher Flächenpressung bei einer punktförmigen Anlage der Dichtlippen gegeben ist. Die nach außen gerichtete Dichtlippe übernimmt dabei mit ihrer schleifenden Dichtkante die Hauptfunktion der Abdichtung, wird aber durch die nach innen gerichtete zweite Dichtlippe mit deren Abdichtkante in der Dichtwirkung unterstützt. Die zweite nach innen beabstandet angeordnete Dichtkante der ersten Dichtlippe ist in ihrer Wirkung zeitlich versetzt und greift mit ihrer unverbrauchten Geometrie erst dann ein, wenn die erste schleifende Dichtkante mit einem Verschleiß behaftet ist. Es wird demnach eine zweite schleifende Dichtkante realisiert, die die in der Wirkung nachlassende erste schleifende Dichtkante unterstützt. Mit steigendem Verschleiß der ersten schleifenden Dichtkante nimmt die Abdichtwirkung der zweiten schleifenden Dichtkante zu, so dass auch bei einem fortschreitenden Verschleiß des Gelenklagers dieses unter allen Betriebsbedingungen zuverlässig abgedichtet ist.

Weitere vorteilhafte Ausführungsvarianten der Erfindung sind in den Unteransprüchen 2 bis 7 beschrieben.

So ist nach Anspruch 2 vorgesehen, dass die erste schleifende Dichtkante der ersten Dichtlippe im eingebauten Zustand mit einer Vorspannung an der sphärisch gekrümmten Außenfläche des Innenringes anliegt. Durch diese Vorspannung ist ein straffes Anliegen der Dichtlippe sichergestellt, so dass ein Eindringen von Schmutz von außen nach innen in das Gelenklager vermieden ist.

Nach Anspruch 3 soll die dritte schleifende Dichtkante der zweiten Dichtlippe im eingebauten Zustand mit einer Vorspannung an der sphärisch gekrümmten Außenfläche des Innenringes anliegen, die wesentlich geringer als die Vorspannung der ersten schleifenden Dichtkante der ersten Dichtlippe ist. Dadurch soll zum Ausdruck kommen, dass die dritte schleifende Dichtkante der zweiten Dichtlippe immer nur eine Unterstützung der ersten Dichtlippe ist, die den Hauptanteil in der Dichtwirkung des Gelenklagers trägt.

Nach einem weiteren Merkmal der Erfindung nach Anspruch 4 soll ein erster Schenkel des winkelförmigen Trägers in Richtung des Dichtungskörpers parallel zur Lagerachse verlaufen und ein zweiter Schenkel soll parallel zu der durch den Lagermittelpunkt gelegten Ebenen verlaufen, wobei der zweite Schenkel in Richtung der ersten schleifenden Dichtkante weist.

Durch diese gegenseitige Zuordnung von winkelförmigen Träger und Dichtungskörper ist sichergestellt, dass die Dichtung einerseits sehr stabil ausgebildet ist und sich andererseits auch präzise in der im Außenring umlaufenden Nut verankern läßt.

Auch ist es gemäß Anspruch 5 möglich, dass der erste Schenkel des winkelförmigen Trägers an seiner Außenseite wenigstens teilweise vom Dichtungskörper umgeben ist. Auf diese Weise ist eine innige Verbindung vom winkelförmigen Träger und Dichtungskörper realisiert, so dass die gesamte Dichtung noch einmal in ihrer Steifigkeit verbessert ist.

Wie aus Anspruch 6 ersichtlich, soll der winkelförmige Träger aus einem Metall und der Dichtungskörper aus einem Elastomer bestehen.

Schließlich ist nach Anspruch 7 vorgesehen, dass das Gelenklager als ein wartungsfreies Trockengleitlager ausgebildet ist, wobei zwischen der sphärisch gekrümmten Innenfläche des Außenringes und der sphärisch gekrümmten Außenfläche des Innenringes eine Gleitschicht angeordnet ist. Da dieser Lagertyp auf Lebenszeit ohne Nachschmierung ausgelegt ist, ist eine besonders in der Wirkung weitreichende und zuverlässig arbeitende Abdichtung erforderlich.

Die Erfindung wird an nachstehendem Ausführungsbeispiel näher erläutert.

### Kurze Beschreibung der Zeichnungen

Es zeigen:
- Figur 1: einen Längsschnitt durch ein Gelenklager nach dem bisherigen Stand der Technik,
- Figur 2: eine vergrößerte Darstellung eines Ausschnittes aus einem erfindungsgemäß abgedichteten Gelenklager vor dem Einbau und
- Figur 3: das gleiche nach dem Einbau.

### Ausführliche Beschreibung der Zeichnungen

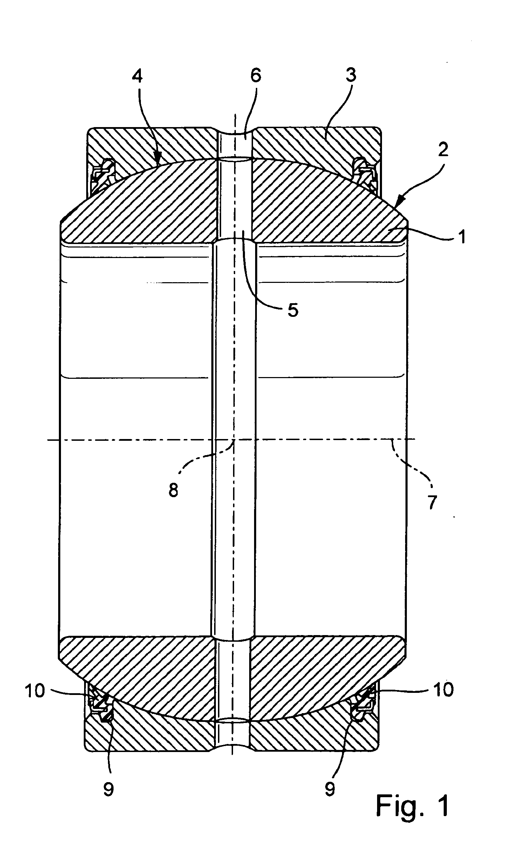

Das in Figur 1 in der Schnittdarstellung nach dem Stand der Technik dargestellte Gelenklager weist den Innenring 1 auf, der über seine sphärisch gekrümmte Außenfläche 2 von der entgegengesetzt dazu sphärisch gekrümmten Innenfläche 4 des Außenrings 3 aufgenommen ist. Zum Gelenklager gehört weiter die Dichtung 10, die in der im Außenring 3 umlaufenden Nut 9 befestigt ist. Am anderen Ende liegt die Dichtung 10 mit ihren Dichtlippen schleifend an der sphärisch gekrümmte Außenfläche 2 des Innenringes 1 an, so dass die beiden gekrümmten Flächen 2 und 4 der Lagerringe 1 und 3 gegen von außen eindringendem Schmutz gesichert sind. Die Figur zeigt weiter, dass im vorliegendem Beispiel das Gelenklager nachschmierbar ist, wobei in diesem Fall sowohl der Innenring 1 als auch der Außenring 3 mit Schmiermitteldurchtrittsbohrungen 5 und 6 versehen sind. Wie weiter erkennbar, kann bei einem fest im Gehäuse angeordneten Außenring 3 der Innenring 2 um seine Lagerachse 7 drehend bewegt werden, wobei auch ein Verschwenken um den Lagermittelpunkt 8 möglich ist.

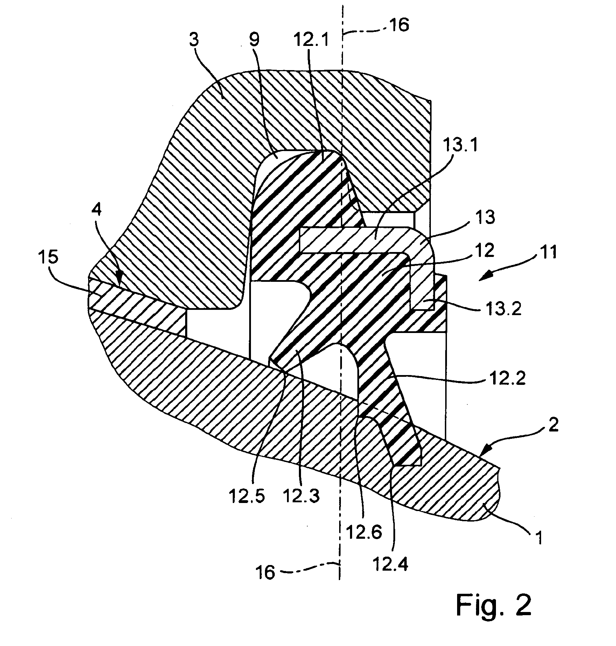

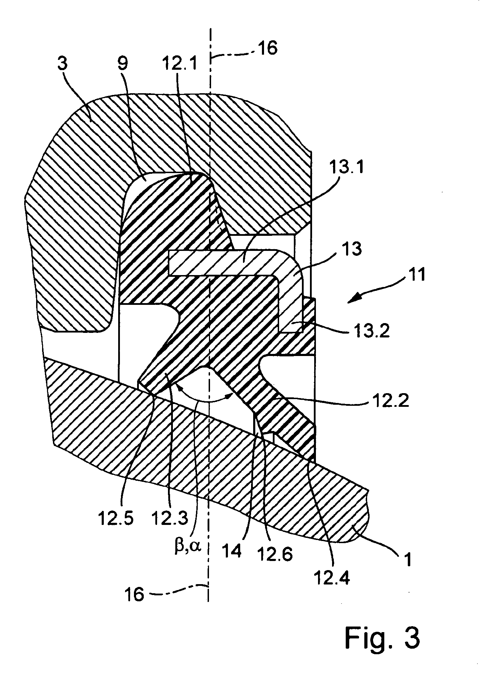

Wie aus den Figuren 2 und 3 ersichtlich, besteht die erfindungsgemäße Dichtung 11 aus dem Dichtungskörper 12 und dem Träger 13, wobei der Träger 13 im Dichtungskörper 12 einvulkanisiert ist. Der aus einem Elastomer bestehende Dichtungskörper 12 weist am äußeren Ende den Vorsprung 12.1 auf, mit dem er in der im Außenring 3 umlaufenden Nut 9 eingesetzt ist. Der aus einem Eisenwerkstoff bestehende Träger 13 weist den in axialer Richtung nach innen verlaufenden ersten Schenkel 13.1 und den rechtwinklig dazu angeordneten, parallel zur Ebene 16 verlaufenden zweiten Schenkel 13.2 auf. Beide Schenkel 13.1, 13.2 sind an ihren Außenseiten wenigstens teilweise vom Dichtungskörper 12 umgeben, so dass eine stabile Dichtung 11 gebildet ist.

In Richtung Innenring 1 spaltet sich der Dichtungskörper 12 in die zwei voneinander beabstandeten Dichtlippen 12.2 und 12.3 auf, wobei die erste Dichtlippe mit 12.2 und die zweite Dichtlippe mit 12.3 bezeichnet ist. Beide Dichtlippen 12.2, 12.3 sind am Dichtungskörper 12 elastisch angebunden, wobei die erste Dichtlippe 12.2 gegenüber der Ebene 16 geneigt nach außen und die zweite Dichtlippe 12.3 geneigt nach innen verläuft. Die Ebene 16 ist durch die Dichtung 11 gelegt und verläuft senkrecht zur Lagerachse 7. Der Neigungswinkel der ersten Dichtlippe 12.2 ist mit α und der Neigungswinkel der zweiten Dichtlippe 12.3 ist mit β bezeichnet. Ein Vergleich der beiden Figuren (Figur 2 nicht eingebauter Zustand der Dichtung 11 und Figur 3 eingebauter Zustand der Dichtung 11) macht deutlich, dass die Vorspannung der ersten Dichtlippe 12.2 und damit der ersten Dichtkante 12.4 wesentlich größer ist als die Vorspannung der zweiten Dichtlippe 12.3 und damit der Dichtkante 12.5. Dies ergibt sich daraus, dass der Neigungswinkel β nahezu gleich bleibt, während der Neigungswinkel α sich vergrößert, da im eingebauten Zustand die erste Dichtlippe 12.2 nach außen ausgelenkt ist.

Die in Figur 3 unmittelbar eingebaute, noch nicht mit Verschleiß behaftete Dichtung 11 läßt erkennen, dass zwischen der zweiten Dichtkante 12.6 und der sphärisch gekrümmten Außenfläche 2 des Innenringes 1 der Spalt 14 gebildet ist. Mit zunehmenden Verschleiß der ersten Dichtkante 12.4 wird sich der Spalt 14 nach und nach verringern, bis er schließlich ganz verschwunden ist und die zweite Dichtkante 12.6 schleifend an der sphärisch gekrümmten Außenfläche 2 des Innenringes 1 ebenfalls anliegt. So ist in erfindungsgemäßer Weise eine Dreifachdichtung entstanden, die letztendlich vom Verschleiß unabhängig ist und durch die Dichtkanten 12.4, 12.6 und 12.5 gebildet ist. Diese drei schleifenden Dichtkanten beginnen von außen mit der ersten Dichtkante 12.4, gefolgt von der zweiten Dichtkante 12.6 und schließlich der dritten Dichtkante 12.5 und sorgen in eindrucksvoller Weise dafür, dass von außen kein Schmutz und keine Feuchtigkeit in das Lager eindringen kann. Dies ist insbesondere von Bedeutung, da im Ausführungsbeispiel das erfindungsgemäße Gelenklager mit einer hochwertigen Gleitschicht 15 ausgestattet ist, die zu verlässig zu schützten ist. So ist beispielsweise für die Gleitschicht 15 Material auf Basis von PTFE (Polytetrafluoräthylen) denkbar, wobei das in ihrer Leistungsfähigkeit aufsteigend PTFE-Verbundwerkstoff, PTFE-Folie und PTFE-Gewebe sind.

### Bezugszeichen

- 1: Innenring
- 2: sphärische Außenfläche
- 3: Außenring
- 4: sphärische Innenfläche
- 5: Schmiermitteldurchtrittsbohrung
- 6: Schmiermitteldurchtrittsbohrung
- 7: Lagerachse
- 8: Lagermittelpunkt
- 9: umlaufende Nut
- 10: Dichtung
- 11: Dichtung
- 12: Dichtungskörper
- 12.1: Vorsprung
- 12.2: erste Dichtlippe
- 12.3: zweite Dichtlippe
- 12.4: erste Dichtkante
- 12.5: dritte Dichtkante
- 12.6: zweite Dichtkante
- 13: Träger
- 13.1: Schenkel
- 13.2: Schenkel
- 14: Spalt
- 15: Gleitschicht
- 16: Ebene
- α: Neigungswinkel
- β: Neigungswinkel

## Patentansprüche

1. Gelenklager, bestehend aus einem Innenring (1) mit einer sphärisch gekrümmten Außenfläche (2) und einem diesen aufnehmenden Außenring (3) mit einer sphärisch gekrümmten Innenfläche (4), wobei in einer im Außenring (3) umlaufenden Nut (9) eine Dichtung angeordnet ist, die einen ringförmigen Träger (13) mit einem im Wesentlichen winkelförmigen Querschnitt und einen mit dem Träger (13) verbundenen Dichtungskörper (12) aufweist, der an der sphärisch gekrümmten Außenfläche (2) des Innenringes (1) schleifend anliegt, **dadurch gekennzeichnet, dass** der Dichtungskörper (12) in Richtung des Innenringes (1) zwei voneinander beabstandete, einander entgegengerichtete elastische Dichtlippen (12.2, 12.3) aufweist, wobei gegenüber einer, zu einer Lagerachse (7) senkrecht verlaufenden Ebene (16), die erste Dichtlippe (12.2) nach außen und die zweite Dichtlippe (12.3) nach innen ausgerichtet ist und beide Dichtlippen (12.2, 12.3) wenigstens eine schleifende Dichtkante (12.4, 12.5) aufweisen, wobei sich an die erste schleifende Dichtkante (12.4) nach innen beabstandet eine zweite Dichtkante (12.6) anschließt, die im eingebauten Zustand bei noch nicht eingetretenem Verschleiß von der sphärisch gekrümmten Außenfläche (2) des Innenringes (1) durch einen Spalt (14) beabstandet angeordnet ist.

2. Gelenklager nach Anspruch 1, **dadurch gekennzeichnet, dass** die erste schleifende Dichtkante (12.4) der ersten Dichtlippe (12.2) im eingebauten Zustand mit Vorspannung an der sphärisch gekrümmten Außenfläche (2) des Innenringes (1) anliegt.

3. Gelenklager nach Anspruch 1, **dadurch gekennzeichnet, dass** die dritte schleifende Dichtkante (12.5) der zweiten Dichtlippe (12.3) im eingebauten Zustand mit einer Vorspannung an der sphärisch gekrümmten Außenfläche (2) des Innenrings (1) anliegt, die wesentlich geringer als die Vorspannung der ersten schleifenden Dichtkante (12.4) der ersten Dichtlippe (12.2) ist.

4. Gelenklager nach Anspruch 1, **dadurch gekennzeichnet, dass** ein erster Schenkel (13.1) des winkelförmigen Trägers (13) in Richtung des Dichtungskörpers (12) parallel zur Lagerachse (7) verläuft und ein zweiter Schenkel (13.2) parallel zu der gelegten Ebene (16) verläuft, wobei der zweite Schenkel (13.2) in Richtung der ersten schleifenden Dichtkante (12.4) weist.

5. Gelenklager nach Anspruch 1, **dadurch gekennzeichnet, dass** der erste Schenkel (13.1) des winkelförmigen Trägers (13) an seiner Außenseite wenigstens teilweise vom Dichtungskörper (12) umgeben ist.

6. Gelenklager nach Anspruch 1, **dadurch gekennzeichnet, dass** der winkelförmige Träger (13) aus einem Metall und der Dichtungskörper (12) aus einem Elastomer besteht.

7. Gelenklager nach Anspruch 1, **dadurch gekennzeichnet, dass** es als ein wartungsfreies Trockengleitlager ausgebildet ist, wobei zwischen der sphärisch gekrümmten Innenfläche (4) des Außenringes (3) und der sphärisch gekrümmten Außenfläche (2) des Innenrings (1) eine Gleitschicht (15) angeordnet ist.

## Claims

1. Spherical plain bearing, consisting of an inner ring (1) having a spherically curved outer surface (2) and an outer ring (3) receiving the inner ring and having a spherically curved inner surface (4), a seal being arranged in a continuous groove (9) in the outer ring (3), which seal comprises an annular support (13) with a substantially angular cross-section and a sealing body (12) connected to the support (13), which sealing body rests rubbingly against the spherically curved outer surface (2) of the inner ring (1), **characterized in that**, in the direction of the inner ring (1), the sealing body (12) comprises two mutually spaced resilient sealing lips (12.2, 12.3) facing in opposite directions, the first sealing lip (12.2) being oriented outwards and the second sealing lip (12.3) being oriented inwards relative to a plane (16) extending perpendicularly to a bearing axis (7) and both sealing lips (12.2, 12.3) comprising at least one rubbing sealing edge (12.4, 12.5), a second sealing edge (12.6) adjoining the first rubbing sealing edge (12.4) in an inwardly spaced manner, which second sealing edge, when fitted, is spaced from the spherically curved outer surface (2) of the inner ring (1) by a gap (14) when wear has not yet occurred.

2. Spherical plain bearing according to Claim 1, **characterized in that**, when fitted, the first rubbing sealing edge (12.4) of the first sealing lip (12.2) rests with prestress against the spherically curved outer surface (2) of the inner ring (1).

3. Spherical plain bearing according to Claim 1, **characterized in that**, when fitted, the third rubbing sealing edge (12.5) of the second sealing lip (12.3) rests against the spherically curved outer surface (2) of the inner ring (1) with a degree of prestress which is substantially less than the prestress of the first rubbing sealing edge (12.4) of the first sealing lip (12.2).

4. Spherical plain bearing according to Claim 1, **characterized in that** a first leg (13.1) of the angular support (13) extends in the direction of the sealing body (12) parallel to the bearing axis (7) and a second leg (13.2) extends parallel to the applied plane (16), the second leg (13.2) pointing in the direction of the first rubbing sealing edge (12.4).

5. Spherical plain bearing according to Claim 1, **characterized in that** the first leg (13.1) of the angular support (13) is surrounded on its outside at least in part by the sealing body (12).

6. Spherical plain bearing according to Claim 1, **characterized in that** the angular support (13) consists of a metal and the sealing body (12) of an elastomer.

7. Spherical plain bearing according to Claim 1, **characterized in that** it takes the form of a maintenance-free dry plain bearing, an overlay (15) being arranged between the spherically curved inner surface (4) of the outer ring (3) and the spherically curved outer surface (2) of the inner ring (1).

## Revendications

1. Palier articulé, constitué d'une bague interne (1) avec une surface externe (2) de courbure sphérique et d'une bague externe (3) recevant celle-ci, avec une surface interne (4) de courbure sphérique, un joint d'étanchéité étant disposé dans une rainure (9) entourant la bague externe (3) et présentant un support de forme annulaire (13) ayant une section transversale essentiellement coudée et un corps d'étanchéité (12) connecté au support (13), qui s'applique de manière abrasive contre la surface externe (2) de courbure sphérique de la bague interne (1), **caractérisé en ce que** le corps d'étanchéité (12) présente dans la direction de la bague interne (1), deux lèvres d'étanchéité élastiques (12.2, 12.3) espacées l'une de l'autre et orientées à l'opposé l'une de l'autre, la première lèvre d'étanchéité (12.2), par rapport à un plan (16) s'étendant perpendiculairement à un axe du palier (7), étant orientée vers l'extérieur et la deuxième lèvre d'étanchéité (12.3) vers l'intérieur, et les deux lèvres d'étanchéité (12.2, 12.3) présentant au moins une arête d'étanchéité abrasive (12.4, 12.5), une deuxième arête d'étanchéité (12.6) espacée vers l'intérieur se raccordant à la première arête d'étanchéité abrasive (12.4), et étant disposée dans l'état monté, de manière espacée par une fente (14) de la surface externe (2) de courbure sphérique de la bague interne (1), lorsque l'usure n'a pas encore eu lieu.

2. Palier articulé selon la revendication 1, **caractérisé en ce que** la première arête d'étanchéité abrasive (12.4) de la première lèvre d'étanchéité (12.2) s'applique, dans l'état monté, avec une précontrainte contre la surface externe (2) de courbure sphérique de la bague interne (1).

3. Palier articulé selon la revendication 1, **caractérisé en ce que** la troisième arête d'étanchéité abrasive (12.5) de la deuxième lèvre d'étanchéité (12.3) s'applique, dans l'état monté, avec une précontrainte contre la surface externe (2) de courbure sphérique de la bague interne (1), qui est sensiblement plus faible que la précontrainte de la première arête d'étanchéité abrasive (12.4) de la première lèvre d'étanchéité (12.2).

4. Palier articulé selon la revendication 1, **caractérisé en ce qu'**une première branche (13.1) du support de forme coudée (13) s'étend dans la direction du corps d'étanchéité (12) parallèlement à l'axe du palier (7), et une deuxième branche (13.2) s'étend parallèlement au plan posé (16), la deuxième branche (13.2) étant tournée dans la direction de la première arête d'étanchéité abrasive (12.4).

5. Palier articulé selon la revendication 1, **caractérisé en ce que** la première branche (13.1) du support de forme coudée (13) est au moins partiellement entourée par le corps d'étanchéité (12) sur son côté extérieur.

6. Palier articulé selon la revendication 1, **caractérisé en ce que** le support de forme coudée (13) se compose d'un métal et le corps d'étanchéité (12) se compose d'un élastomère.

7. Palier articulé selon la revendication 1, **caractérisé en ce qu'**il est réalisé sous forme de palier lisse sec sans entretien, une couche de glissement (15) étant disposée entre la surface interne (4) de courbure sphérique de la bague externe (3) et la surface externe (2) de courbure sphérique de la bague interne (1).
